# EUROPÄISCHE PATENTSCHRIFT

(11) **EP 0 723 115 B1**
(45) Veröffentlichungstag und Bekanntmachung des Hinweises auf die Patenterteilung: **16.08.2000**
(21) Anmeldenummer: 96100731.7
(22) Anmeldetag: 19.01.1996
(51) Int. Cl.: F24C 7/08, A21B 1/40, A47J 37/00, G05D 23/00

(54) **Ofen und Verfahren zum Garen von Fleisch**
Oven and process for cooking meat products
Four et procédé pour cuire de la viande

(30) Priorität: 23.01.1995 CH 17495
(43) Veröffentlichungstag der Anmeldung: 24.07.1996
(73) Patentinhaber: V-Zug AG, 6301 Zug (CH)
(72) Erfinder: Nussbaumer, Peter, CH-6300 Zug (CH); Meditz, André, CH-6330 Cham (CH); Matzinger, Reinhard, CH-6330 Cham (CH); Piazza, Raffaele, CH-6300 Zug (CH); Iten, Ida, CH-6300 Zug (CH)
(74) Vertreter: Blum, Rudolf Emil Ernst

(56) Entgegenhaltungen:
- EP-A- 0 587 323
- DE-A- 4 217 943
- US-A- 4 054 778
- US-A- 4 317 976

## Beschreibung

Die Erfindung betrifft einen Ofen und ein Verfahren zum Garen von Fleisch gemäss den Oberbegriffen der unabhängigen Patentansprüche.

Beim sogenannten Niedertemperatur-Garen bzw. Zartgaren wird das zu garende Fleisch während mehrerer Stunden bei verhältnismässig niedriger Garguttemperatur im Ofen gegart. Dabei findet eine äusserst schonende Garung statt, bei welcher das Fleisch sehr zart und schmackhaft bleibt.

In der Praxis ist es jedoch recht schwierig, die richtige Ofentemperatur und Gardauer festzulegen, da diese Werte von der Fleischart und den Dimensionen des Fleischstücks abhängen.

In DE-OS 42 17 943 und US 4,317,976 wird ein Verfahren beschrieben, bei welchem die Garguttemperatur dauernd gemessen und der Ofen nach Erreichen einer End-Garguttemperatur abgeschaltet wird. Da jedoch die Erwärmung des Fleisches von dessen Dimensionen abhängt, werden hier bei gleicher Backraumtemperatur dünne bzw. kleine Fleischstücke kürzer gegart als grosse.

Deshalb stellt sich die Aufgabe, einen Ofen bzw. ein Verfahren der eingangs genannten Art bereitzustellen, bei welchem diese Schwierigkeiten zumindest reduziert werden können.

Diese Aufgabe wird vom Gegenstand der unabhängigen Ansprüche erfüllt.

Durch die Ueberwachung und Regelung der Garguttemperatur wird erreicht, dass im Innern des Fleischstücks bekannte Bedingungen herrschen, welche nicht vom Gewicht bzw. den Dimensionen des Fleischstücks abhängen. Durch die Eingabe der gewünschten End-Garguttemperatur kann der Garvorgang der gewünschten Fleischart angepasst werden. Die Erwärmungsgeschwindigkeit des Garguts ist nicht von seinen Dimensionen abhängig.

Vorzugsweise wird die Garguttemperatur in der Regelphase kontinuierlich, möglichst linear, erhöht, wobei eine Gardauer im Bereich von dreieinhalb bis viereinhalb Stunden bevorzugt wird. Die End-Garguttemperatur soll möglichst im Bereich von 50 bis 90 °C liegen. Es zeigt sich, dass bei Einhaltung dieser Bedingungen eine besonders schonende Garung stattfindet und dass das Fleisch zart und schmackhaft wird.

Zu Beginn der Gardauer kann auch eine Grillphase durchlaufen werden, in der das Fleisch bei erhöhter Ofentemperatur gegrillt wird. Da in dieser Phase vor allem die Temperatur im Randbereich des Fleisches von Bedeutung ist, wird hier die Temperatur im Backraum und nicht jene im Fleisch geregelt.

Der Ofen kann ferner die Möglichkeit einer Eingabe der gewünschten Garendzeit bieten, zu der das Fleisch fertig gegart sein soll.

Um das Fleisch auf Wunsch grillieren zu können, kann der Ofen sowohl mit Infrarot-Grillheizrohren als auch mit Backheizrohren ausgerüstet sein, wobei die entsprechenden Rohre von der Ofensteuerung automatisch in den entsprechenden Arbeitsphasen angesteuert werden.

Der erfindungsgemässe Ofen kann als normaler Haushaltofen mit allen konventionellen Funktionen ausgestaltet sein. Zur automatischen Ausführung des erfindungsgemässen Garverfahrens ist er mit einer geeigneten Steuerung versehen, welche auf Wunsch aktiviert werden kann.

Weitere Vorteile und Anwendungen der Erfindung ergeben sich aus der nun folgenden Beschreibung eines Ausführungsbeispiels anhand der Figuren. Dabei zeigen:
Figur 1 eine schematische Darstellung der Komponenten eines erfindungsgemässen Ofens,
Figur 2 den schematischen Temperaturverlauf beim Zartgaren mit Grillphase, und
Figur 3 den schematischen Temperaturverlauf beim Zartgaren ohne Grillphase.

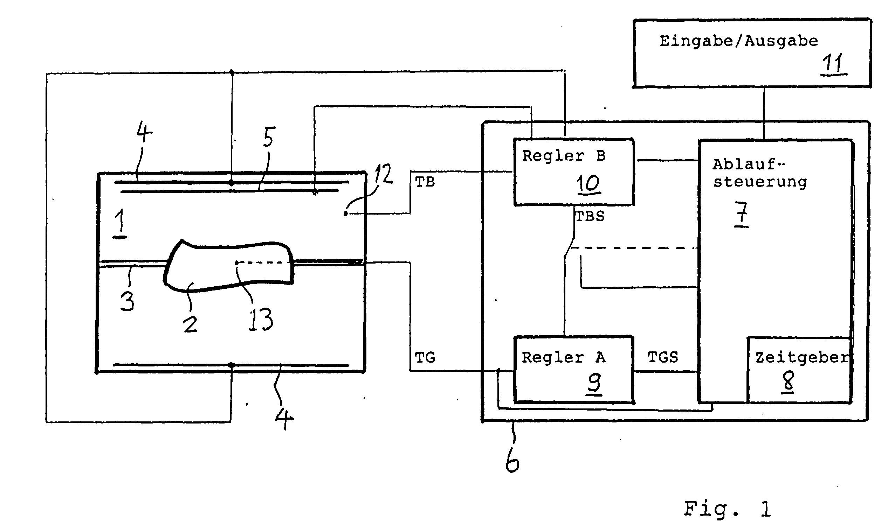

Der schematische Aufbau eines erfindungsgemässen Ofens wird in Figur 1 gezeigt. Er umfasst einen Backraum 1, in welchem sich das zu garende Fleisch 2 befindet. Das Fleisch kann, wie hier gezeigt, auf einem Drehspiess 3 befestigt sein. Es kann auch in einer geeigneten, hitzefesten Form ruhen. Der Backraum 1 wird in bekannter Weise von Backheizrohren 4 bzw. einem Infrarot-Grillheizrohr 5 geheizt.

Die Funktion des Ofens wird von einer Ofensteuerung 6 kontrolliert. Diese umfasst eine Ablaufsteuerung 7 mit Zeitgeber 8, welche den automatischen Betrieb des Ofens bestimmt. Ferner sind zwei Regler 9, 10 vorgesehen, welche zur aktiven Ueberwachung und Steuerung der Temperaturen verwendet werden. Die gewünschte Ofenfunktion kann vom Koch über einen Ein- und Ausgabeteil 11 gewählt und überwacht werden.

Zur Ueberwachung der Backraumtemperatur TB ist ein Backraumtemperatur-Sensor 12 vorgesehen. Ferner kann auch die Temperatur TG im Innern des Fleischstücks 2 gemessen werden. Diese Temperatur TG wird Garguttemperatur, oftmals auch Kerntemperatur, genannt. TG wird mittels eines NTC-Widerstands gemessen, der sich in der Spitze einer Messnadel befindet. Wird das Fleisch 2 auf einem Drehspiess 3 montiert, so kann die Messnadel z. B. achsial in den Spiess eingeführt werden, wie dies in CH 667 792 beschrieben wird. Wird das Fleisch nicht drehend gelagert, so kann die Messnadel direkt in das Fleisch gestochen werden. Der NTC-Widerstand soll sich dabei etwa im geometrischen Zentrum des Stücks befinden.

Nebst den üblichen Funktionen eines konventionellen Haushaltofens bietet die Ofensteuerung 6 die Möglichkeit, automatisch eine im folgenden beschriebene Zartgarung durchzuführen.

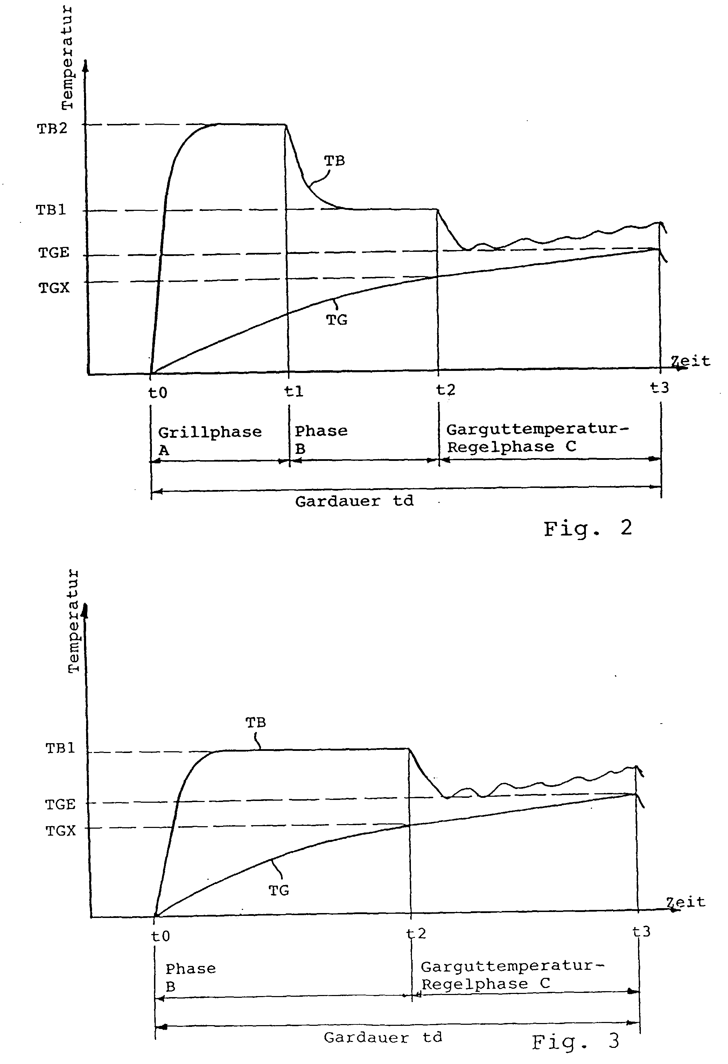

Figur 2 zeigt den Verlauf der Backraumtemperatur TB und der Garguttemperatur TG beim Zartgaren, falls das Fleisch zuerst gegrillt wird. Dieser Garvorgang eignet sich vor allem für Fleisch, welches nicht vorgebraten wurde.

Um eine Zartgarung mit Grillphase durchzuführen, wird das Fleisch 2 im Backraum 1 auf dem Drehspiess 3 montiert.

Sodann wählt der Koch am Ein-/Ausgabeteil 11 das Steuerprogramm "Zartgaren mit Grill" und gibt eine gewünschte End-Garguttemperatur TGE und eine gewünschte Gardauer td ein. Die End-Garguttemperatur hat beim Zartgaren mit Grillphase einen Wert zwischen ca. 65°C und 90 °C. Sie hängt von der jeweiligen Fleischsorte ab. Die Gardauer td kann zwischen dreieinhalb und viereinhalb Stunden eingestellt werden und liegt vorzugsweise bei vier Stunden. Liegt td wesentlich ausserhalb dieses Zeitintervalls, so wird das Fleisch zäh und trocken.

Ferner kann der Koch auch eine gewünschte Garendzeit t3 eingeben, falls er den Garvorgang nicht sofort starten möchte. In diesem Fall startet die Zeitsteuerung 8 des Ofens den Garvorgang erst, wenn die Zeit t3 - td erreicht ist. Gibt der Koch keine gewünschte Garendzeit t3 ein, so wird der Garvorgang sofort gestartet.

Der Garvorgang beginnt zur Zeit t0 mit der Grillphase A. In dieser Phase schaltet die Ofensteuerung 2 das Infrarot-Grillheizrohr 5 ein und steuert dessen mittlere Leistung so, dass sich die Backraumtemperatur auf eine Grilltemperatur TB2 eingeregelt, welche im Bereich von 250 °C liegt. Hierzu wird dem Regler B eine entsprechende Soll-Backraumtemperatur TBS zugeführt. Der Regler B vergleicht diesen Sollwert mit der momentanen Backraumtemperatur TB und steuert die Ofenleistung entsprechend.

Die Länge der Grillphase kann vom Koch eingegeben werden und beträgt zwischen 35 und 50 Minuten. Sie hängt vom verwendeten Fleischstück ab und sollte bei fettem Fleisch relativ hoch gewählt werden.

Wie aus der Figur 2 ersichtlich ist, steigt die Garguttemperatur während der Grillphase A langsam an. Wichtig ist während der Grillphase jedoch die Backraumtemperatur, da die Krustenbildung von dieser abhängt. Deshalb ist eine direkte Regelung der Backraumtemperatur TB auf den konstanten Wert TB2 in dieser Phase von Vorteil.

Nach Abschluss der Grillphase zur Zeit t1 wird die Solltemperatur TBS des Reglers B auf einen Wert TB1 abgesenkt. Entsprechend sinkt die Backraumtemperatur TB auf TB1 ab und bleibt auf diesem Wert konstant (Phase B). TB1 wird durch die gewünschte End-Garguttemperatur TGE gegeben und hat zum Beispiel einen festen Wert zwischen 1.5 x TGE bis 2.0 x TGE (TGE in °C).

Mit Beginn der Phase B wird das Infrarot-Grillheizrohr 5 abgeschaltet und die Wärme wird dem Backraum über die Backheizrohre 4 zugeführt.

In Phase B wird dauernd überwacht, ob die Garguttemperatur TG einen Schwellwert TGX überschreitet. Dieser Schwellwert TGX ist durch die gewünschte End-Garguttemperatur TGE gegeben. Vorzugsweise liegt TGX etwa 15°C unter TGE. Sobald die Garguttemperatur TG den Schwellwert TGX erreicht hat, wird die Garguttemperatur-Regelphase C eingeleitet. Im Gegensatz zu den vorherigen Phasen A und B wird nun nicht mehr die Backraumtemperatur TB sondern die Garguttemperatur TG auf einen gewünschten Wert geregelt. Hierzu wird Regler A verwendet, dem die momentane Garguttemperatur TG und ein Garguttemperatur-Sollwert TGS zugeleitet werden. Er vergleicht die beiden Werte und erzeugt einen Sollwert TBS für die Backraumtemperatur, der dem Regler B zugeleitet wird.

In der Phase C wird der Sollwert TGS für die Garguttemperatur von der Ablaufsteuerung 7 mit zunehmender Zeit linear erhöht (linearer Sollwertverlauf), so dass rechtzeitig am Ende des Garvorgangs zur Zeit t3 die gewünschte End-Garguttemperatur TGE erreicht wird. Somit bildet also der Garguttemperaturverlauf in der Phase C im wesentlichen eine Gerade zwischen der Temperatur TGX zum Zeitpunkt t2 und TGE zum Zeitpunkt t3. Im Gegensatz hierzu kann die Backraumtemperatur TB in dieser Phase gemäss den Vorgaben des Reglers A schwanken, jedoch nie mehr über TB1 ansteigen.

Der Motor des Drehspiesses 3 bleibt während der ganzen Gardauer td in Betrieb. Damit wird das Abtropfen von Fleischsaft vermindert.

Figur 3 zeigt den Temperaturverlauf bei einer Zartgarung ohne Grillphase. Dieses Garverfahren findet vorzugsweise dann Anwendung, wenn das Fleisch vor dem Garen in einer Pfanne angebraten wurde. Dies hat den Vorteil, dass dabei die Garguttemperatur weniger stark ansteigt als bei einer Grillphase im Ofen.

Auch bei der Zartgarung ohne Grillphase gibt der Koch zuerst die Gardauer td und die gewünschte End-Garguttemperatur TGE ein. td liegt wiederum zwischen dreieinhalb und viereinhalb Stunden. TGE liegt zwischen 50 und 70 °C. Wie im Beispiel nach Figur 2 kann der Start t0 des Garprozesses durch (optionale) Eingabe der Garendzeit t3 verzögert werden.

Nach dem Start t0 geht der Ofen sofort in die Phase B, in welcher mit dem Regler B die Backraumtemperatur TB auf den Wert TB1 eingeregelt wird. TB1 hat wiederum einen festen Wert zwischen 1.5 x TGE bis 2.0 x TGE (TGE in °C).

Die Phase B wird beendet, sobald die Garguttemperatur TG den Schwellwert TGX erreicht hat, der hier ebenfalls 15 °C unterhalb der gewünschten End-Garguttemperatur TGE liegt. Dann wird die Garguttemperatur-Regelphase C eingeleitet, welche gleich wie jene nach Fig. 2 abläuft. Nun wird also die Garguttemperatur TG geregelt und von der Ablaufsteuerung 7 linear mit der Zeit erhöht, so dass sie beim Ende t3 des Garvorgangs den gewünschten Endwert TGE hat.

In einem bevorzugten Ausführungsbeispiel des Ofens ist Regler A als Proportional-Integral-Regler (PI-Regler) ausgeführt. Seine Regelparameter hängen von den Ofeneigenschaften und teilweise von der Fleischgeometrie ab. Sie werden werkseitig auf typische Werte eingestellt. Sie können jedoch auch z.B. aufgrund von Messungen des Verlaufs der Garguttemperatur TG in den Phasen A und/oder B der jeweiligen Fleischgeometrie angepasst werden. Regler B ist als Proportional- oder Proportional-Integral-Regler (P- oder PI-Regler) ausgeführt. Die Regler sind zusammen mit der Ablaufsteuerung als Programm eines Mikroprozessors implementiert. Beide Regler können jedoch auch in einer anderen, dem Fachmann bekannten Art ausgeführt werden.

## Patentansprüche

1. Garverfahren zum Garen von Fleisch (2) in einem Ofen mit einem Backraum, wobei eine gewünschte End-Garguttemperatur (TGE) im Fleisch (2) vorgegeben wird, dadurch gekennzeichnet, dass eine gewünschte Gardauer (td) vorgegeben wird und dass mindestens während einer Garguttemperatur-Regelphase der Gardauer die Garguttemperatur (TG) im Fleisch (2) gemessen und der Ofen derart geregelt wird, dass die Garguttemperatur (TG) in der Garguttemperatur-Regelphase einem zeitabhängigen Garguttemperatur-Sollwertverlauf (TGS) folgt, wobei der Sollwertverlauf so ausgelegt ist, dass am Ende der Gardauer (td) die End-Garguttemperatur (TGE) erreicht wird.

2. Garverfahren nach Anspruch 1, dadurch gekennzeichnet, dass der Garguttemperatur-Sollwertverlauf (TGS) monoton, vorzugsweise streng monoton, insbesondere linear, bis zur End-Garguttemperatur (TGE) ansteigt.

3. Garverfahren nach einem der vorangehenden Ansprüche, dadurch gekennzeichnet, dass die Garguttemperatur-Regelphase beginnt, wenn die Garguttemperatur (TG) um einen vorgegebenen Wert, vorzugsweise etwa 15 °C, kleiner als die End-Garguttemperatur (TGE) ist.

4. Garverfahren nach einem der vorangehenden Ansprüche, dadurch gekennzeichnet, dass vor der Garguttemperatur-Regelphase zu Beginn der Gardauer (td) eine Grillphase durchlaufen wird, bei der die Temperatur im Backraum auf eine Temperatur geregelt wird, welche oberhalb von Temperaturen liegt, die während der Garguttemperatur-Regelphase im Backraum herrschen.

5. Garverfahren nach einem der vorangehenden Ansprüche, dadurch gekennzeichnet, dass die Gardauer (td) einen Wert zwischen dreieinhalb und viereinhalb Stunden aufweist.

6. Garverfahren nach einem der vorangehenden Ansprüche, dadurch gekennzeichnet, dass das Fleisch (2) während der gesamten Gardauer gedreht wird.

7. Ofen zur Durchführung des Garverfahrens nach einem der vorangehenden Ansprüche mit einem Backraum (1), Heizelementen (4,5), einem Garguttemperatursensor (13) zur Messung einer Gargutempteratur (TG) im Fleisch (2) und einer Ofensteuerung (6) mit Temperaturregelung, Zeitsteuerschaltung (8) und Eingabemitteln (11), wobei mit den Eingabemitteln (11) eine gewünschte End-Garguttemperatur (TGE) bei Ende (t3) eines Garvorgangs eingebbar ist, dadurch gekennzeichnet,
dass die Ofensteuerung (6) Mittel (7) zur Festlegung eines zeitabhängigen Garguttemperatur-Verlaufs aufweist, der am Ende einer vorgegebenen Gardauer (td) der End-Garguttemperatur entspricht, und der mindestens während einer Garguttemperatur-Regelphase (C) der Gardauer (td) als Garguttemperatur-Sollwert (TGS) der Temperaturregelung zugeführt wird, und
dass mittels der Temperaturregelung die Garguttemperatur (TG) aufgrund des Garguttemperatur-Sollwerts (TGS) regelbar ist.

8. Ofen nach Anspruch 7, dadurch gekennzeichnet, dass mit der Ofensteuerung (6) während der Garguttemperatur-Regelphase (C) die Garguttemperatur (TG) im wesentlichen linear bis zur End-Garguttemperatur (TGE) erhöhbar ist.

9. Ofen nach einem der Ansprüche 7 oder 8 dadurch gekennzeichnet, dass die Ofensteuerung Mittel zur Detektion einer von der End-Garguttemperatur abhängigen Garguttemperatur-Schwelle (TGX) aufweist, wobei bei Ueberschreitung der Garguttemperatur-Schwelle (TGX) die Garguttemperatur-Regelphase (C) einleitbar ist.

10. Ofen nach einem der Ansprüche 7-9 dadurch gekennzeichnet, dass ein Backraum-Temperatursensor (12) zur Messung einer Backraumtemperatur (TB) im Backraum vorgesehen ist und dass die Temperaturregelung einen ersten Regler (9) und einen zweiten Regler (10) aufweist, wobei mit dem ersten Regler (9) aufgrund der Garguttemperatur (TG) und einem durch den Garguttemperatur-Verlauf gegebenen Garguttemperatur-Sollwert (TGS) ein Backraumtemperatur-Sollwert (TBS) ermittelbar ist, und wobei mit dem zweiten Regler (10) aufgrund der Backraumtemperatur (TB) und dem Backraumtemperatur-Sollwert (TBS) die Heizelemente (4,5) steuerbar sind, um die Backraumtemperatur (TB) dem Backraumtemperatur-Sollwert (TBS) anzugleichen.

11. Ofen nach Anspruch 10 dadurch gekennzeichnet, dass der erste Relger (9) ein Proportional-Integral-Regler ist.

12. Ofen nach einem der Ansprüche 7 - 11 dadurch gekennzeichnet, dass mit der Zeitsteuerschaltung (8) die gewünschte Gardauer (td) und eine Garendzeit (t3) des Garvorgangs einstellbar sind, und dass die Zeitsteuerschaltung (8) den Garvorgang so (t0) einleitet, dass nach Ablauf der Gardauer (td) die Garendzeit (t3) erreicht ist.

13. Ofen nach einem der Ansprüche 7 - 12 dadurch gekennzeichnet, dass mit der Zeitsteuerschaltung (8) zu Beginn des Garverfahrens eine Grillphase (A) einleitbar ist, während der mit der Temperaturregelung die Backraumtemperatur (TB) auf eine Grilltemperatur (TB2) regelbar ist.

14. Ofen nach Anspruch 13 dadurch gekennzeichnet, dass die Heizelemente ein Infrarot-Grillheizrohr (5) und Backheizrohre (4) aufweisen, wobei mit der Ofensteuerung (6) während der Grillphase (A) das Infrarot-Grillheizrohr (5) und während der Garguttemperatur-Regelphase (B) die Backheizrohre (4) heizbar sind.

15. Ofen mit einer Ofensteuerung, mit welcher der Ofen automatisch steuerbar ist, dadurch gekennzeichnet, dass die Ofensteuerung (6) zur Ausführung des Garverfahrens nach einem der Ansprüche 1 - 6 ausgelegt ist.

## Claims

1. Cooking process for cooking meat (2) in an oven with a cooking chamber, whereby a desired article being cooked end temperature (TGE) in the meat is given, characterised in that a desired cooking time (td) is set and in that at least during one article being cooked temperature control phase of the cooking time the article being cooked temperature (TG)in the meat (2) is measured and the oven is controlled in such a manner, that the temperature (TG) of the article being cooked follows during the article being cooked temperature control phase a time-dependent course of a rated article being cooked temperature value (TGS), whereby the course of the rated value is adjusted in such a manner, that the article being cooked end temperature (TGE) is arrived at the end of the cooking time.

2. Cooking process according to claim 1, characterised in that the course of the rated article being cooked temperature value (TGS) rises monotonous, preferably strictly monotonous, specifically linearly up to the article being cooked end temperature (TGE).

3. Cooking process according to one of the preceding claims, characterised in that the article being cooked temperature controlling phase begins when the article being cooked temperature (TG) is lower by a set value, preferably about 15°, than the end article being cooked temperature (TGE).

4. Cooking process according to one of the preceding claims, characterised in that prior to the article being cooked temperature controlling phase a grilling phase is passed through, during which the temperature in the cooking chamber is controlled to a temperature which lies above temperatures which prevail in the cooking chamber during the article being cooked temperature control phase.

5. Cooking process according to one of the preceding claims, characterised in that the cooking time (td) has a value between three and a half and four and a half hours.

6. Cooking process according to one of the preceding claims, characterised in that the meat (2) is rotated during the entire cooking time.

7. Oven for practising the cooking process according to one of the preceding claims, with a cooking chamber (1), heating elements (4, 5), an article being cooked temperature sensor (13) for measuring an article being cooked temperature (TG) in the meat (2), and an oven controller (6) with a temperature control, time control circuit (8) and input means (11), whereby a desired article being cooked end temperature (TGE) is inputtable at the end (t3) of a cooking process by the input means (11), characterised in that
the oven controller (6) comprises means (7) for a setting of a time-dependent course of the article being cooked temperature which corresponds at the end of a set cooking time (td) to the end article being cooked temperature, and which is transmitted at least during an article being cooked temperature control phase C) of the cooking time (td) as rated article being cooked temperature value (TGS) to the temperature controller, and
that the article being cooked temperature (TG) is controllable by means of the temperature controller based on the rated article being cooked temperature value (TGS).

8. Oven according to claim 7, characterised in that during the controlling phase (C) of the article being cooked temperature, the article being cooked temperature (TG) can be increased by the oven controller (6) substantially linear up to the article to be cooked end temperature (TGE).

9. Oven according to one of the claims 7 or 8, characterised in that the oven controller comprises means for detecting an article being cooked temperature threshold (TGX) which depends on the article being cooked end temperature, whereby upon an exceeding of the article being cooked temperature threshold (TGX) the controlling phase (C) of the article being cooked temperature can be initiated.

10. Oven according to one of the claims 7 - 9, characterised in that a cooking chamber temperature sensor (12) for a measuring of a cooking chamber temperature (TB) in the cooking chamber is foreseen, and that the temperature controller comprises a first controller (9) and a second controller (10), whereby a rated cooking chamber temperature (TBS) can be determined by the first controller (9) based on the article being cooked temperature (TG) and a rated article being cooked temperature value (TGS) given by the course of the article being cooked temperature, and whereby the heating elements (4, 5) are controllable by the second controller (10) based on the temperature (TB) of the cooking chamber and the rated cooking chamber temperature (TBS) in order to adjust the temperature (TB) of the cooking chamber to the rated cooking chamber temperature (TBS).

11. Oven according to claim 10, characterised in that the first controller (9) is a proportional plus reset action controller.

12. Oven according to one of the claims 7 - 11, characterised in that the desired cooking time (td) and a cooking end time (t3) of the cooking process can be set by the time controller circuit (8), and that the time controller circuit (8) initiates the cooking process (t0) in such a manner, that the cooking end time (t3) is reached after expiration of the cooking time (td).

13. Oven according to one of the claims 7 - 12, characterised in that a grilling phase (A) can be initiated by the time controller circuit (8) at the beginning of the cooking process, during which the cooking chamber temperature (TB) is controllable to a grilling temperature (TB2) by the temperature controller.

14. Oven according to claim 13, characterised in that the heating elements include an infrared grilling heating tube (5) and baking heating tubes (4), whereby during the grilling phase (A) the infrared grilling heating tube (5) and during the article being cooked temperature control phase (B) the baking heating tubes (4) are heatable by the oven controller (C).

15. Oven including an oven controller, by means of which the oven is automatically controllable, characterised in that the oven controller (6) is designed to practise the cooking method according to one of the claims 1 - 6.

## Revendications

1. Procédé pour la cuisson de viande (2) dans l'enceinte d'un four, une température intérieure finale (TGE) désirée de la viande (2) étant prédéterminée, caractérisé en ce qu'un temps de cuisson désiré (td) est donné et en ce que l'on mesure au cours de la cuisson, au moins pendant une phase de régulation de la température du met la température (TG) à l'intérieur de la viande (2) et qu'on règle le four de manière à ce que pendant la phase de régulation la température (TG) à l'intérieur de la viande suive une courbe de consigne de la température (TGS) en fonction du temps, cette fonction de consigne étant choisie de façon à obtenir à la fin du temps de cuisson désiré (td) la température intérieure finale désirée (TGE) du met à cuire.

2. Procédé de cuisson selon la revendication 1, caractérisé en ce que la courbe de consigne (TGS) de la température intérieure du met à cuire s'élève de façon monotone, de préférence strictement monotone et en particulier de façon linéaire, jusqu'à la température intérieure finale (TGE) du met à cuire.

3. Procédé selon une des revendications précédente, caractérisé en ce que la phase de régulation de la température du met débute lorsque la température (TG) du met à cuire est inférieure d'une valeur prédéterminée, de préférence d'environ 15°C, à la température intérieure finale désirée (TGE) du met.

4. Procédé selon une des revendications précédente, caractérisé en ce qu'au début du temps de cuisson (td) la phase de régulation de la température du met est précédée d'une phase de grillade au cours de laquelle la température de l'enceinte est réglée à un valeur supérieure aux températures régnant dans l'enceinte pendant la phase de régulation de la température du met.

5. Procédé selon une des revendications précédente, caractérisé en ce que le temps de cuisson (td) est compris entre trois heures et demi et quatre heures et demi.

6. Procédé selon une des revendications précédente, caractérisé en ce l'on fait tourner la viande (2) pendant toute la durée de la cuisson.

7. Four pour réaliser la cuisson selon une des revendications précédente, avec une enceinte de cuisson (1), des éléments de chauffage (4, 5), un senseur (13) de la température du met pour mesurer la température (TG) à l'intérieur de la viande (2), et un dispositif de commande (6) du four comportant un régulateur de température, une minuterie (8) et des moyens (11) d'introduction de données pouvant recevoir une valeur de la température intérieure finale du met désirée (TGE) à la fin (t3) de la cuisson,
caractérisé en ce que le dispositif de commande (6) comporte des moyens (7) pour déterminer une courbe de température du met en fonction du temps conduisant à une température donnée du met à la fin d'un temps de cuisson (td) prédéterminé, les valeurs de cette courbe étant transmises au régulateur de température en tant que valeurs de consigne au moins durant une phase (C) de régulation de la température de met pendant la durée (td) de la cuisson, et
en ce que la température (TG) du met est réglable au moyen du régulateur de température en fonction de la valeur de consigne (TGS) de la température du met.

8. Four selon la revendication 7, caractérisé en ce que le dispositif de commande (6) permet d'augmenter la température du met (TG) pendant la phase (C) de régulation de la température de façon essentiellement linéaire jusqu'à la température finale désirée du met (TGE).

9. Four selon une des revendications 7 ou 8, caractérisé en ce que le dispositif de commande du four comporte des moyens pour détecter un seuil de température (TGX) du met dépendant de la température finale du met (TGE), la phase (C) de régulation de la température pouvant être déclenchée lorsque le seuil de température (TGX) du met est dépassé.

10. Four selon une des revendications 7 - 9, caractérisé en ce qu'il comporte un senseur (12) de température de l'enceinte placé dans celle-ci pour mesurer sa température (TB), et en ce que le régulateur de température comporte un premier (9) et un second (10) régulateur dont le premier permet de déterminer une valeur de consigne (TBS) de la température de l'enceinte en fonction de la température du met (TG) et d'une valeur de consigne (TGS) de la température du met déterminée à partir de la courbe de température du met en fonction du temps, et en ce que les éléments de chauffage (4, 5) sont commandés par le second régulateur (10) en fonction de la température (TB) de l'enceinte et de sa valeur de consigne (TBS) de manière à amener la température (TB) de l'enceinte à la valeur de consigne (TBS) de cette température.

11. Four selon la revendication 10, caractérisé en ce que le premier régulateur (9) est un régulateur proportionnel à intégration.

12. Four selon une des revendications 7 - 11, caractérisé en ce que la durée de cuisson désirée (td) et un temps de fin de cuisson (t3) peuvent être introduits au moyen de la minuterie (8), et que celle-ci déclenche (t0) la cuisson de façon à ce qu'elle prenne fin (t3) lorsque la durée désirée de la cuisson (td) est atteinte.

13. Four selon une des revendications 7 - 12, caractérisé en ce qu'une phase de grillade (A) pendant laquelle la température de l'enceinte (TB) peut être réglée au moyen du régulateur de température à une température de gril (TB2) peut être déclenchée au début du procédé de cuisson au moyen de la minuterie (8).

14. Four selon la revendication 13, caractérisé en ce que les éléments de chauffage comportent une barre de gril à infrarouge (5) ainsi que des barres de chauffage du four (4), le dispositif de commande (6) du four étant agencé pour pouvoir chauffer la barre de gril à infrarouge (5) pendant la phase de grillade (A) et les barres de chauffage de four (4) pendant la phase de réglage (B) de la température du met.

15. Four avec un dispositif de commande de four agencé pour le commander automatiquement, caractérisé en ce que le dispositif de commande (6) est agencé pour procéder à une cuisson selon l'une des revendications 1 - 6.
